# EUROPEAN PATENT APPLICATION

(11) **EP 1 184 203 A2**
(43) Date of publication of application: **06.03.2002**
(21) Application number: 01307282.2
(22) Date of filing: 24.08.2001
(51) Int. Cl.: B60C 9/20, C08L 21/00

(54) **Pneumatic tyre containing monofilaments**

(30) Priority: 29.08.2000 JP 2000259458
(71) Applicant: Sumitomo Rubber Industries Ltd., Kobe-shi, Hyogo-ken (JP)
(72) Inventor: Iizuka, Toru, c/o Sumitomo Rubber Industries Ltd., Kobe-shi, Hyogo-ken (JP); Tsumori, Isamu, c/o Sumitomo Rubber Industries Ltd, Kobe-shi, Hyogo-ken (JP)
(74) Representative: Stewart, Charles Geoffrey

(57) **Abstract**

A pneumatic tyre comprises a belt (7) disposed radially outside a carcass (6) in the tread portion (2), and the belt (7) comprises a ply (14) of monofilament metallic cords (13) rubberised with a topping rubber (12), the topping rubber (12) including a rubber base, a methylene donor and at least one of resorcinol and resorcinol condensation products.

## Description

The present invention relates to a pneumatic tyre provided with a tread reinforcing belt comprising metallic monofilament cords rubberised with a special topping rubber.

Hitherto, multi-filaments steel cords made of a plurality of thin steel filaments twisted together have been widely used in the tread reinforcing belts for pneumatic tyres.

In recent years, in order to reduce the tyre weight and manufacturing cost, the use of monofilament steel cords was proposed, namely, the cord is a single steel filament itself.

In pneumatic tyres provided with a belt made of monofilament steel cords, however, there is a tendency for the tyre rigidity to become insufficient for the steering stability as the tyre size increases and/or the aspect ratio decreases.

The rigidity can be increased by increasing the cord count and/or using thicker cords. But, these techniques increase the tyre weight and cost and therefore nullify the merits of monofilament cords.

It is an object of the present invention to provide a pneumatic tyre in which the rigidity is increased to improve the steering stability without increasing the cord diameter, cord count and the like.

According to the present invention, a pneumatic tyre comprises a carcass extending between bead portions through a tread portion and sidewall portions, a belt disposed radially outside the carcass in the tread portion, the belt comprising a ply of monofilament metallic cords rubberised with a topping rubber, and the topping rubber including a rubber base, a methylene donor and at least one of resorcinol and resorcinol condensation products.

An embodiment of the present invention will now be described in detail, by way of example only, in conjunction with the accompanying drawings in which:
Fig. 1 is a cross sectional view of a passenger car tyre according to the present invention;
Fig.2 is an enlarged cross sectional view of a monofilament metallic cord ply in the belt thereof;
Fig.3A is a cross sectional view of a monofilament metallic cord;
Fig.3B is a cross sectional view of a multifilament cord;
Fig.4A shows a monofilament metallic cord which is two-dimensionally waved; and
Fig.4B shows a monofilament metallic cord which is three-dimensionally waved.

In the figures, a pneumatic tyre 1 according to the present invention comprises a tread portion 2, a pair of sidewall portions 3, a pair of bead portions 4, a carcass 6 extended between the bead portions 4, and a belt disposed radically outside the carcass 6 in the tread portion 2.

The carcass 6 comprises at least one ply of cords arranged radially at an angle of 90 to 70 degrees with respect to the tyre equator, and extending between the bead portions 4 through the tread portion 2 and sidewall portions 3, and turned up around the bead core 5 in each bead portion 4 from the inside to the outside of the tyre so as to form a pair of turned up portions 6B and one main portion 6A therebetween.

In this example, the carcass 6 is composed of two plies 6a and 6b.

For the carcass cords, organic fibre cords, e.g. nylon, rayon, polyester, aromatic polyamide and the like may be used. Further, multi-filament metallic cords composed of metallic filaments twisted together may be used.

Between the main portion 6A and turned up portion 6B in each bead portion 4, there is disposed a bead apex 8 made of hard rubber extending radially outwardly from the bead core 5 and tapering towards its radially outer end.

The above-mentioned belt comprises a breaker 7 and optionally a band (not shown).

The breaker 7 is disposed on the radially outer side of the carcass crown portion. The breaker 7 comprises at least two crossed plies, a radially outer ply 7a and a radially inner ply 7b, each made of cords 10 laid parallel with each other at an angle of from 15 to 30 degrees with respect to the tyre circumferential direction so that the cords in one ply cross the cords in the other ply.

The band is disposed radially outside the breaker 7 and made of cords whose cord angle is not more than 5 degrees with respect to the tyre circumferential direction. For example, the band may be made of spirally wound organic fibre cords, e.g. nylon and the like.

In this example, the belt consists of the two breaker plies 7a and 7b. In the case of a heavy duty radial tyre for trucks and buses, the breaker is usually made of three or four plies.

According to the present invention, the belt includes a ply 14 of monofilament metallic cords 13, namely, at least one of the two crossed plies 7a and 7b, in this example each of the plies 7a and 7b, is such a monofilament metallic cord ply 14.

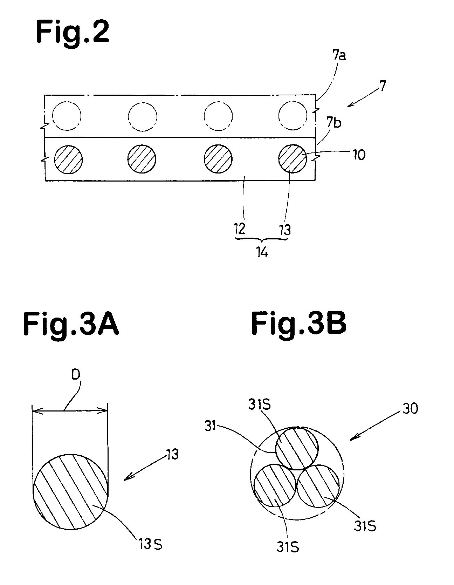

As shown in Fig.2, the monofilament metallic cord ply 14 is formed by monofilament cords 13 laid substantially in parallel with each other and rubberised with a topping rubber 12, in other words, a sheet of topping rubber 12 in which non-twisted solo metallic filaments 13 are embedded. The thickness of the sheet is more than the thickness D of the filament 13.

In this example, the monofilament cord 13 is a straight (unwaved) filament 13 having a circular cross sectional shape as shown in Fig.3A. In general, the diameter D of the monofilament cord 13 is set in a range of from 0.35 to 0.70 mm.

It is preferable that the cross sectional area 13S of the monofilament cord 13 is set in a range of from 0.68 to 0.88 times the total sectional area of filaments 31 of a multifilament steel cord 30 shown in Fig.3B which is employed for the same breaker in the conventional design. In the case of passenger car tyres, a steel cord of a 1X3/0.27 structure whose total sectional area is 0.1717 mm² has been widely used. Accordingly, the diameter D of the monofilament cord 13 is preferably set in a range of from 0.39 to 0.44 mm (sectional area 13S is 0.117 to 0.151 mm²). In the case of heavy duty radial tyres, likewise, the diameter D is preferably set in a range of 0.44 to 0.70 mm.

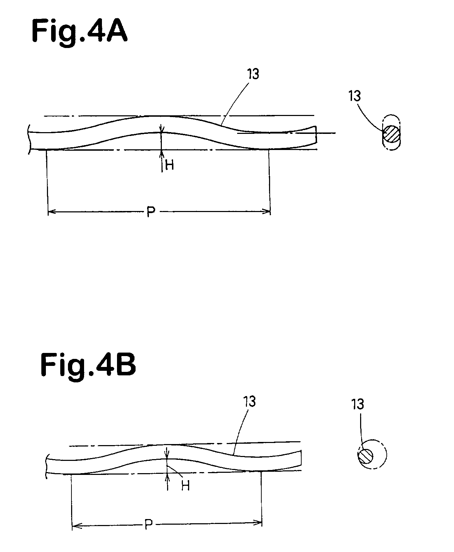

In this example, the monofilament cord 13 is straight, but the cord 13 may be waved two-dimensionally or three-dimensionally as shown in Figs.4A and 4B. In this case, it is preferable that the wave pitches P are not less than 14.0 mm and the wave heights H are 0.002 to 0.02 times the wave pitches P.

As to the cross sectional shape of the monofilament cord 13, aside from the circle, ovals, quadrilaterals whose corners are rounded and the like may be used.

Preferably, the cord count N in each ply is set in a range of from 15 to 60 (/5 cm).

The topping rubber 12 is compounded from: 100 parts by weight of a rubber base; 0.5 to 5.0 parts by weight, preferably 0.8 to 3.0 parts by weight of at least one of resorcinol and resorcinol condensation products; a methylene donor; 30 to 60 parts by weight of reinforcement such as carbon black; and additives.

For the rubber base, diene rubber such as natural rubber, butadiene rubber, styrene-butadiene rubber, isoprene rubber, chloroprene rubber, acrylonitrile butadiene rubber and the like is suitably used alone or in combination. Preferably, natural rubber is used for its strength and durability.

For the resorcinol condensation products, condensation products of resorcinol and aldehyde or resorcinol resins can be used.

For the methylene donor, hexamethylene tetramine, hexamethoxy methylol melamine and its derivatives, azadioxa-bicyclo octane, paraform aldehyde and the like can be used.

For the reinforcement, aside from carbon black, inorganic material such as silica, aluminium hydroxide and the like may be used.

The content of the methylene donor is preferably set in a range of 0.5 to 2.0 times the total content of the resorcinol and/or resorcinol condensation product(s). (hereinafter the "resorcinol content")

During vulcanising the tyre, the resorcinol and/or resorcinol condensation product(s) do the polymerisation reaction with the methylene donor and as a result the rigidity of the topping rubber 12 is improved.

If the total content of the resorcinol and resorcinol condensation product(s) is less than 0.5 parts by weight, the rigidity of the topping rubber 12 is not fully increased. If more than 5.0 parts by weight, kneading of the compound materials becomes difficult, and adhesion to the cords becomes poor.

If the content of the methylene donor is less than 0.5 times the resorcinol content, unreacted resorcinol remains and hinders the adhesion between the rubber and monofilament cords 13. If more than 2.0 times, unreacted methylene donor remains and again hinders the adhesion between the rubber and monofilament cords 13.

If the content of the reinforcement such as carbon black is less than 30 parts by weight, it is difficult to obtain a necessary rigidity for improving the steering stability. If more than 60 parts by weight, the kneading becomes difficult.

### Comparison Tests

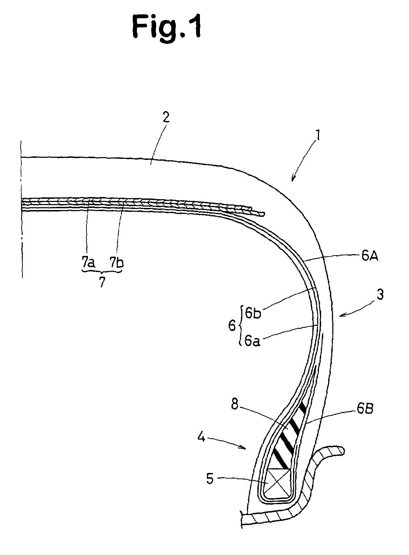

Test tyres of size 185/65R15 (rim size 15X5 1/2JJ) for passenger cars were made and tested for the steering stability. The test tyres had the same structure shown in Fig.1 except for the belt structure. The test results and the belt specifications are shown in Table 1.

### Steering stability test:

During running a 2000cc FF passenger car on a dry asphalt road on a tyre test course, a test driver evaluated the steering stability into five ranks based on steering response, rigidity, grip and the like. The larger the rank number, the better the steering stability. (tyre pressure=200 Kpa)

**Table 1**

| Tyre | Ref.1 | Ex.1 | Ex.2 | Ref.2 | Ref.3 | Ref.4 |
|---|---|---|---|---|---|---|
| Belt | | | | | | |
| Cord structure | 1X3/0.27 | 1X1/0.4 | 1X1/0.4 | 1X1/0.4 | 1X1/0.6 | 1X1 |
| Cord count/5cm | 34 | 40 | 34 | 40 | 34 | 48 |
| Topping rubber | | | | | | |
| Natural rubber *1 | 100 | 100 | 100 | 100 | 100 | 100 |
| Carbon black *1 | 60 | 60 | 60 | 60 | 60 | 60 |
| Resorcinol resin *1 *2 | 0 | 0 | 0 | 1 | 3 | 0 |
| Methylene donor *1 *3 | 0 | 0 | 0 | 1.5 | 3 | 0 |
| Complex elastic modulus *4 | 100 | 125 | 170 | 100 | 100 | 100 |
| Complex elastic modulus *4 | 100 | 125 | 170 | 100 | 100 | 100 |
| Steering stability | 3 | 3.5 | 3.5 | 3 | 2.5 | 3.5 |
| Tyre weight | 100 | 95 | 90 | 95 | 90 | 100 |

| | | | | | | |
|---|---|---|---|---|---|---|
| *1) parts by weight | | | | | | |
| *2) Sumicanol 620 (Trade name) Sumitomo Chemical Company, Limited | | | | | | |
| *3) Sumicanol 507 (Trade name) Sumitomo Chemical Company, Limited | | | | | | |
| *4) The measurements under the following conditions are indicated by an index based on Ref. being 100, wherein the larger the index, the higher the modulus. Temperature of 70 deg.C, Frequency of 10 Hz Dynamic distortion of ± 2 %, Initial strain of 10% | | | | | | |

From the test results, it was confirmed that the example tyres according to the invention were improved in steering stability while achieving a weight reduction.

## Claims

1. A pneumatic tyre comprising a carcass (6) extending between bead portions (4) through a tread portion (2) and sidewall portions (3), a belt (7) disposed radially outside the carcass (6) in the tread portion (2), **characterised in that** the belt comprises a ply |(14) of monofilament metallic cords (13) rubberised with a topping rubber (12), and the topping rubber (12) including a rubber base, a methylene donor and at least one of resorcinol and resorcinol condensation products.

2. A pneumatic tyre according to claim 1, **characterised in that** the topping rubber (12) includes 0.5 to 5.0 parts by weight of the resorcinol and/or resorcinol condensation product(s) with respect to 100 parts by weight of the rubber base.

3. A pneumatic tyre according to claim 1 or 2, **characterised in that** the content in parts by weight of the methylene donor is in a range of 0.5 to 2.0 times the total content in parts by weight of the resorcinol and/or resorcinol condensation product(s).

4. A pneumatic tyre according to claim 1 or 2 or 3, **characterised in that** the topping rubber includes 30 to 60 parts by weight of carbon black with respect to 100 parts by weight of the rubber base.
